# EUROPEAN PATENT SPECIFICATION

(11) **EP 2 793 342 B1**
(45) Date of publication and mention of the grant of the patent: **06.01.2021**
(21) Application number: 12857928.1
(22) Date of filing: 09.11.2012
(51) Int. Cl.: B60L 53/66, B60L 53/62, G06Q 30/02, H02J 3/00

(54) **POWER DEMAND AMOUNT CALCULATION SYSTEM, POWER DEMAND AMOUNT CALCULATION METHOD, POWER DEMAND AMOUNT CALCULATION APPARATUS, PROGRAM, AND RECORDING MEDIUM**
SYSTEM ZUR BERECHNUNG EINES LEISTUNGSBEDARFS, VERFAHREN ZUR BERECHNUNG EINES LEISTUNGSBEDARFS, VORRICHTUNG ZUR BERECHNUNG EINES LEISTUNGSBEDARFS, PROGRAMM UND AUFZEICHNUNGSMEDIUM
SYSTÈME DE CALCUL DE QUANTITÉ DE DEMANDE DE COURANT, PROCÉDÉ DE CALCUL DE QUANTITÉ DE DEMANDE DE COURANT, APPAREIL DE CALCUL DE QUANTITÉ DE DEMANDE DE COURANT, PROGRAMME ET SUPPORT D'ENREGISTREMENT

(30) Priority: 13.12.2011 JP 2011272356
(43) Date of publication of application: 22.10.2014
(73) Proprietor: Mitsubishi Heavy Industries, Ltd., Tokyo 108-8215 (JP)
(72) Inventor: ONO Hidekazu, Tokyo 108-8215 (JP); OKADA Toshiki, Tokyo 108-8215 (JP); SAITO Shinya, Tokyo 108-8215 (JP)
(74) Representative: Henkel & Partner mbB
(86) International application number: PCT/JP2012/079190
(87) International publication number: WO 2013/088877

(56) References cited:
- WO-A1-2011/007573
- WO-A1-2012/023564
- GB-A- 2 446 694
- JP-A- 2000 209 707
- JP-A- 2007 271 424
- JP-A- 2010 540 907
- JP-A- 2011 050 240
- JP-A- 2011 075 561
- US-A1- 2010 114 798
- US-A1- 2010 161 165

## Description

### TECHNICAL FIELD

The present invention relates to a power demand amount calculation system, a power demand amount calculation method, a power demand amount calculation apparatus, a program, and a recording medium. In particular, the present invention relates to a power demand amount calculation system for calculating a demand amount of power necessary for a plurality of electric vehicles, a power demand amount calculation method, a power demand amount calculation apparatus, a program for causing a computer to function as the power demand amount calculation apparatus, and a recording medium recording the program.

### BACKGROUND ART

Although an electric vehicle is mainly charged in a user's personal or corporate garage, a possible traveling distance in one charging process is limited. Therefore, to travel greater distances, charging stations are also required while out. However, this does not mean that tens of thousands of such charging stations are required in Japan as gas stations currently are. In contrast to vehicles for which fuel is only supplied in gas stations such as gasoline-powered vehicles, there is no need for the number of charging stations installed for electric vehicles, which can be charged in garages, to be so great.

In any case, an important point related to a charging infrastructure is that it is essential to prepare a certain number of charging stations as electric vehicles become more popular. This is shown by empirical test results showing that, in places in which Japanese power companies installed rapid charging stations, a daily traveling range of electric vehicles was wider than before due to the sense of security that charging stations would be available.

Therefore, in the future, it is necessary to consider the optimum arrangement of charging stations through a trial and error process as electric vehicles become more popular. For this, it is important to estimate power demand of electric vehicles. There are various technologies available to estimate the power demand of electric vehicles (for example, see Patent Literature 1).

A charging/discharging management apparatus disclosed in Patent Literature 1 monitors charging of an electric vehicle in a charging station and transmits information representing a monitoring result. Therefore, if a business operator analyzes the monitoring result represented by the information received from the charging/discharging management apparatus, it is possible to estimate power demand of electric vehicles.

### PRIOR ART LITERATURE

### PATENT LITERATURE

Patent Literature 1
Japanese unexamined patent application, first publication No. 2011-050240

US2010 161165 A1 discloses a energy meter unit for an electric vehicle which contains energy measuring circuitry, a GPS unit, a CPU, and memory. The energy meter unit is capable of detecting the amount of energy charged at a specific location and storing that information for later uses, such as with a governmental incentive program.

GB 2 446 694 A discloses a method for recharging an electric storage battery in the charging system of a plug-in hybrid electric vehicle from an electric utility power grid, which includes determining the length of time required to recharge the battery, determining the desired time when the recharge is to be completed, transmitting to the electric power utility the length of time required to recharge the battery and the desired time and recharging the battery from the utility grid during a period when projected load demand is lower than peak demand and ending no later than the desired time.

US 2010 114 798 A1 discloses managing electrical charging of vehicles with charging devices related to users demand and available power. One system comprises charging points comprising sockets and a communication module, and a mediator server comprising a database, an application and a graphical user interface. The mediator server is connected to the charging points, to the users and to public utilities and electricity providers. Each charging point is arranged to admit vehicles, couple their charging device to the socket and send vehicle data to the mediator server. The mediator server is arranged to process the vehicle data, user data, and data from the public utilities and the electricity providers, and calculate a vehicle priority and a charging allotment in relation to the number of vehicles at the charging point and to the processed data. Vehicles are charged according to the vehicle priority and the charging allotment.

### DISCLOSURE OF INVENTION

### PROBLEMS TO BE SOLVED BY THE INVENTION

However, when the number of charging stations is small, it is difficult to estimate a highly reliable demand amount because not much information representing charging results for the electric vehicles is obtained according to the technology disclosed in Patent Literature 1.

In addition, when a charging station provider is different from a business operator who estimates power demand, the charging station provider may consider information of the charging results for the electric vehicles as a trade secret and therefore may not disclose it to the business operator who estimates the power demand. In this case, because it is difficult to obtain the information representing the charging results for the electric vehicles or it is possible to obtain information only from a provider of a specific charging infrastructure, it is also difficult to estimate a highly reliable demand amount.

In addition, as described above, an electric vehicle is mainly charged in a user's personal or corporate garage. Therefore, when the power demand by the electric vehicles is estimated based on the charging results for the electric vehicles, information of the charging results in the user's personal or corporate garage should also be collected.

However, an amount of power consumed by other electric devices other than an amount of power with which the electric vehicle is charged is included in a power consumption amount in the user's home or corporate office building. Thus, it is difficult to manage only an amount of power with which the electric vehicle is charged in the user's home or corporate office building.

### MEANS FOR SOLVING THE PROBLEMS

The problem is solved by the technical features of the appended claims.

### EFFECTS OF THE INVENTION

As is apparent from the above description, according to the present invention, it is possible to calculate a highly reliable value as a demand amount of power necessary for a plurality of electric vehicles.

### BRIEF DESCRIPTION OF THE DRAWINGS

Fig. 1 is a diagram illustrating an example of a usage environment of a power demand amount calculation system 100 according to an embodiment.
Fig. 2 is a diagram illustrating an example of a block configuration of a power demand amount calculation apparatus 110.
Fig. 3 is a diagram illustrating an example of information stored in a history information storage unit 119 in the form of a table.
Fig. 4 is a diagram illustrating an example of a data structure of floating car data D10.
Fig. 5 is a diagram illustrating an example of data D20 in which a demand amount of power is visualized.
Fig. 6 is a diagram illustrating an example of data D30 in which a demand amount of power is visualized.
Fig. 7 is a diagram illustrating an example of data D40 in which a demand amount of power is visualized.
Fig. 8 is a diagram illustrating an example of data D50 representing an analysis result of a charging pattern of an electric vehicle V.
Fig. 9 is a diagram illustrating an example of an operation flow of the power demand amount calculation apparatus 110.
Fig. 10 is a diagram illustrating an example of an operation flow of the power demand amount calculation apparatus 110.
Fig. 11 is a diagram illustrating an example of an operation flow of the power demand amount calculation apparatus 110.
Fig. 12 is a diagram illustrating an example of a hardware configuration of a computer 800 constituting the power demand amount calculation apparatus 110 according to this embodiment.

### PREFERRED EMBODIMENTS FOR CARRYING OUT THE INVENTION

An aspect of the invention will now be described based on the preferred embodiments, which are not intended to limit the scope of the present invention, but exemplify the invention. All of the features and the combinations thereof described in the embodiment are not necessarily essential to the invention.

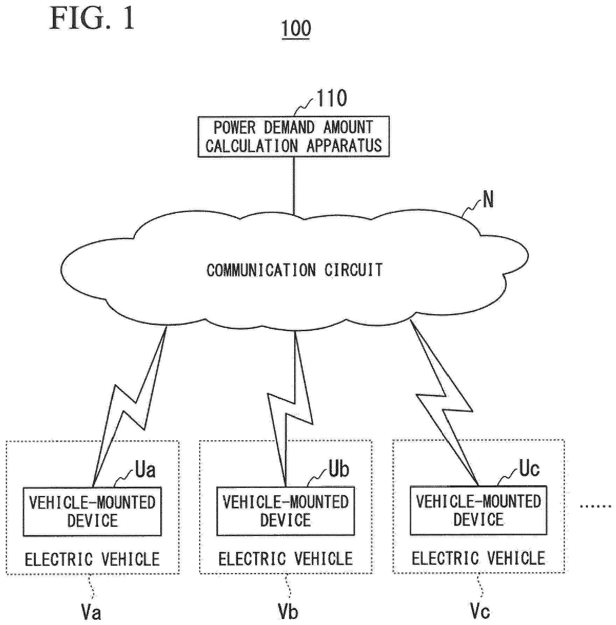

Fig. 1 illustrates an example of a usage environment of a power demand amount calculation system 100 according to an embodiment. The power demand amount calculation system 100 is a system which calculates a demand amount of power necessary for a plurality of electric vehicles Va, Vb, Vc, ... (hereinafter collectively referred to as an electric vehicle V).

The power demand amount calculation system 100 includes a power demand amount calculation apparatus 110. The power demand amount calculation apparatus 110 is an apparatus for calculating a demand amount of power necessary for a plurality of electric vehicles V. The power demand amount calculation apparatus 110 establishes a communication connection with a plurality of vehicle-mounted devices Ua, Ub, Uc, ... (hereinafter collectively referred to as a vehicle-mounted device U) via a communication circuit N. In addition, the vehicle-mounted device U may be an example of a "vehicle-mounted apparatus" in the present invention. In addition, the communication circuit N includes a computer network such as the Internet, a core network of a communication provider, and various local networks.

The vehicle-mounted device U is mounted on the electric vehicle V. Then, the vehicle-mounted device U establishes a communication connection with a controller area network (CAN) of the electric vehicle V. Here, the CAN is a network for connecting an electronic circuit or each apparatus inside the electric vehicle V.

In addition, in order to prevent description from becoming complex in this embodiment, a configuration in which the power demand amount calculation system 100 includes one power demand amount calculation apparatus 110 will be described. However, the power demand amount calculation system 100 may include a plurality of power demand amount calculation apparatuses 110.

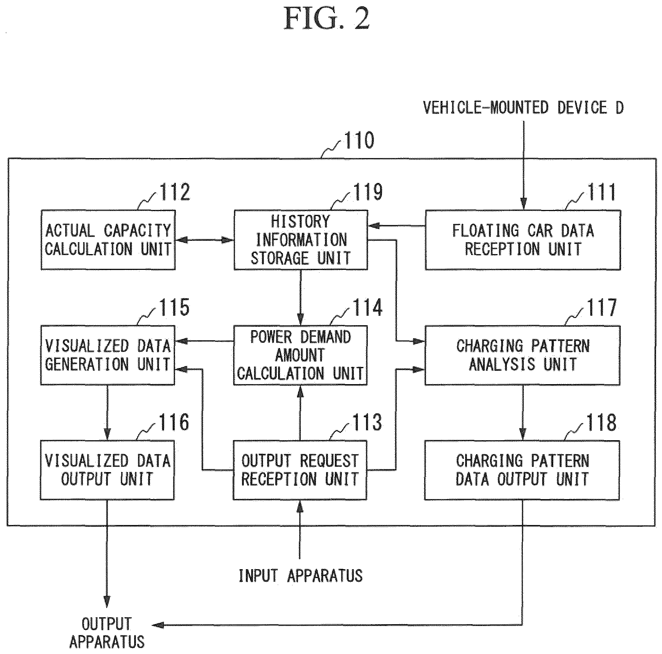

Fig. 2 illustrates an example of a block configuration of the power demand amount calculation apparatus 110. The power demand amount calculation apparatus 110 includes a floating car data reception unit 111, an actual capacity calculation unit 112, an output request reception unit 113, a power demand amount calculation unit 114, a visualized data generation unit 115, a visualized data output unit 116, a charging pattern analysis unit 117, a charging pattern data output unit 118, and a history information storage unit 119. Hereinafter, functions and operations of the components will be described.

The floating car data reception unit 111 receives floating car data from the vehicle-mounted device U of the electric vehicle V. More specifically, the floating car data is data including at least information representing a rated capacity of a battery of an electric vehicle V and information representing a charge level of the battery. Here, the rated capacity is a power amount published by a manufacturer when the rated capacity is produced from full charge in conditions such as a prescribed temperature, a discharging current, and a discharging stop voltage. In addition, the charge level is a ratio excluding a ratio of an amount of discharged electricity from a state in which the battery has been fully charged. In addition, information representing whether the electric vehicle V is being charged may be included in the floating car data. In addition, position information of the electric vehicle V may be included in the floating car data. In addition, identification information of the electric vehicle V may be included in the floating car data. In addition, information representing a model of the electric vehicle V may be included in the floating car data.

The actual capacity calculation unit 112 calculates an actual capacity of the battery based on the rated capacity and the charge level of the battery of the electric vehicle V. More specifically, the actual capacity calculation unit 112 calculates the actual capacity based on information representing the rated capacity and information representing the charge level included in the floating car data received by the floating car data reception unit 111. Here, the actual capacity is a power amount which is actually produced from the battery.

The output request reception unit 113 receives an output request for information representing a demand amount of power input via an input apparatus. In addition, the output request reception unit 113 receives an output request of information representing a charging pattern input via the input apparatus. Here, the input apparatus is an apparatus for giving data or information, an instruction, etc. to the power demand amount calculation apparatus 110.

The power demand amount calculation unit 114 calculates a demand amount of power necessary for the electric vehicle V satisfying a predetermined condition based on at least the rated capacity and the actual capacity of the battery of the electric vehicle V satisfying the predetermined condition. More specifically, the power demand amount calculation unit 114 calculates a demand amount of power based on the actual capacity calculated by the actual capacity calculation unit 112. In addition, the power demand amount calculation unit 114 calculates a demand amount of power necessary for an electric vehicle V excluding the electric vehicle V which is currently being charged. Here, the predetermined condition is a condition for specifying the electric vehicle V serving as a target when the provider of the power demand amount calculation system 100 identifies the demand amount of power necessary for the electric vehicle V. For example, the predetermined condition is considered to be a time zone, a geographical position, a vehicle model, or the like.

The visualized data generation unit 115 generates data in which the demand amount of the power calculated by the power demand amount calculation unit 114 is visualized.

The visualized data output unit 116 outputs data in which the demand amount of the power is visualized to an output apparatus. Here, the output apparatus is an apparatus for receiving data or information from the power demand amount calculation apparatus 110 and presenting the received data or information in a human-recognizable form.

The charging pattern analysis unit 117 analyzes a charging pattern of the electric vehicle V based on at least a time-dependent change in an actual capacity of the battery of the electric vehicle V. More specifically, the charging pattern analysis unit 117 further analyzes the charging pattern based on position information of the electric vehicle V

The charging pattern data output unit 118 outputs data representing an analysis result of the charging pattern of the electric vehicle V to the output apparatus.

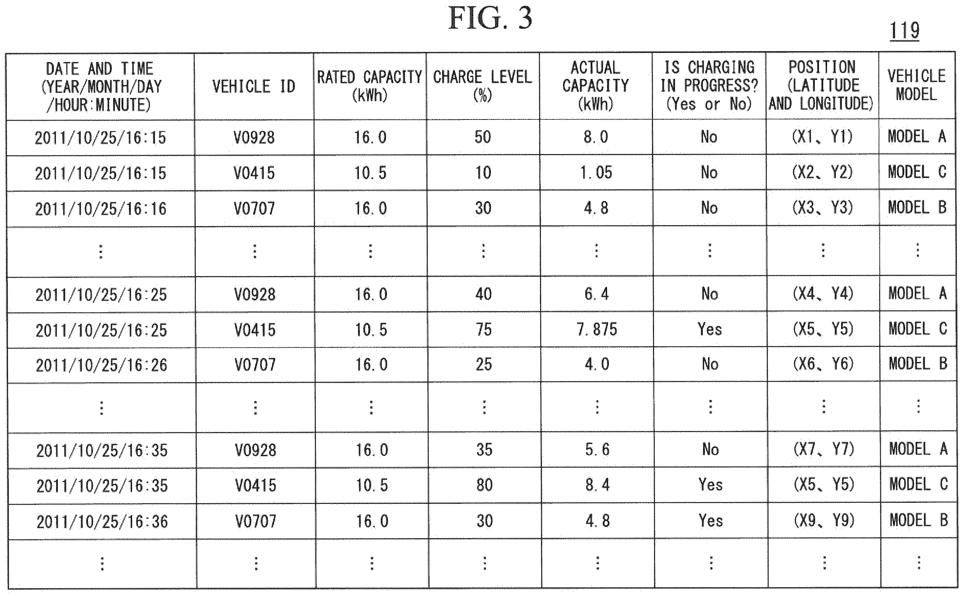

Fig. 3 illustrates an example of information stored in the history information storage unit 119 in the form of a table. Information of a date and time (Year, Month, Day, Hour, Minute), a vehicle identifier (ID), a rated capacity (kWh), a charge level (%), an actual capacity (kWh), information concerning whether or not charging is in progress (Yes or No), a position (latitude and/or longitude), and a vehicle model is associated and stored in the history information storage unit 119.

The information of the date and time (Year, Month, Day, Hour, Minute) is information representing a reception time of the floating car data. The information of the vehicle ID is identification information for uniquely identifying each electric vehicle. The information of the rated capacity (kWh) is information representing a rated capacity of the battery of the electric vehicle V identified by the information of the vehicle ID. The information of the charge level (%) is information representing a charge level of the battery of the electric vehicle identified by the information of the vehicle ID at a time represented in the information of the date and time (Year, Month, Day, Hour, Minute). The information of the actual capacity (kWh) is information representing the actual capacity of the battery of the electric vehicle V identified by the information of the vehicle ID at the time represented in the information of the date and time (Year, Month, Day, Hour, Minute). The information concerning whether or not charging is in progress (Yes or No) is information representing whether the electric vehicle V identified by the information of the vehicle ID is being charged at a time represented in the information of the date and time (Year, Month, Day, Hour, Minute). The information of the position (latitude and/or longitude) is information representing a position of the electric vehicle V identified by the information of the vehicle ID at the time represented in the information of the date and time (Year, Month, Day, Hour, Minute). The information of the vehicle model is information representing the vehicle model of the electric vehicle V identified by the information of the vehicle ID.

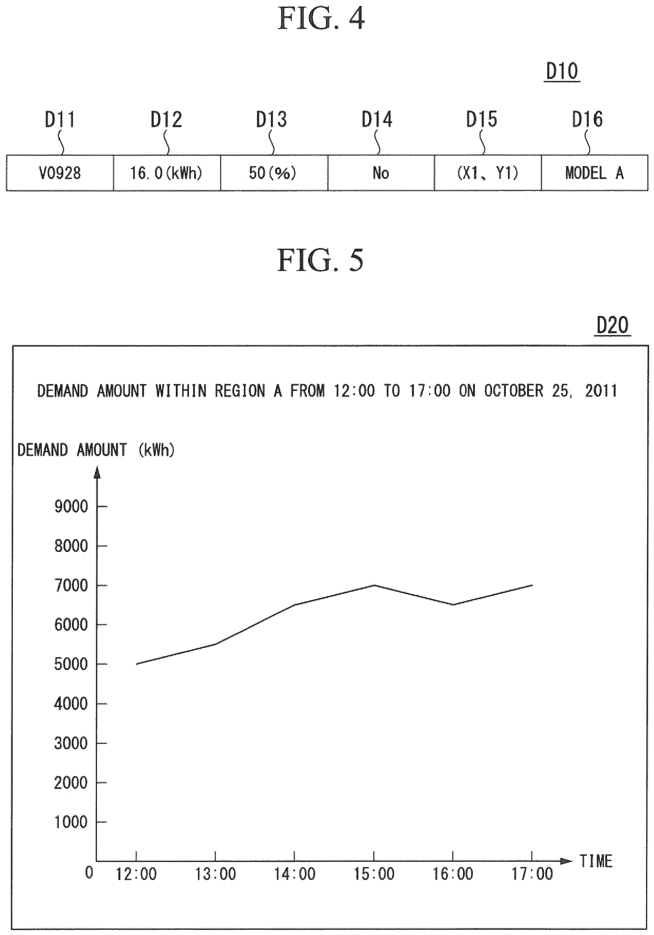

Fig. 4 illustrates an example of a data structure of floating car data D10. In the floating car data D10, information D11 of the vehicle ID, information D12 of the rated capacity (kWh), information D13 of the charge level (%), information D14 concerning whether or not charging is in progress, information D15 of the position (latitude and/or longitude), and information D16 of the vehicle model is included.

The information D11 of the vehicle ID is identification information for identifying the electric vehicle V on which the vehicle-mounted device U transmitting the floating car data D10 is mounted. The information D12 of the rated capacity (kWh) is information representing the rated capacity of the battery of the electric vehicle V identified by the information D11 of the vehicle ID. The information D13 of the charge level (%) is information representing the charge level of the battery of the electric vehicle V identified by the information D11 of the vehicle ID at a time at which the floating car data D10 has been transmitted. The information D14 concerning whether or not charging is in progress is information representing whether the electric vehicle V identified by the information D11 of the vehicle ID is being charged at the time at which the floating car data D10 has been transmitted. The information D15 of the position (latitude and/or longitude) is information representing a position of the electric vehicle V identified by the information D11 of the vehicle ID at the time at which the floating car data D10 has been transmitted. The information D16 of the vehicle model is information representing the position of the electric vehicle V identified by the information D11 of the vehicle ID.

Fig. 5 illustrates an example of data D20 in which a demand amount of power is visualized. The data D20 is data in which a time-dependent change in the demand amount of power necessary for the electric vehicle V within a region A from 12:00 to 17:00 on October 25, 2011 is visualized. In addition, in this example, a reception time of the floating car data is 12:00 to 17:00 on October 25, 2011, and the fact that the position of the electric vehicle V is within the region A is set as a "predetermined condition" in the present invention.

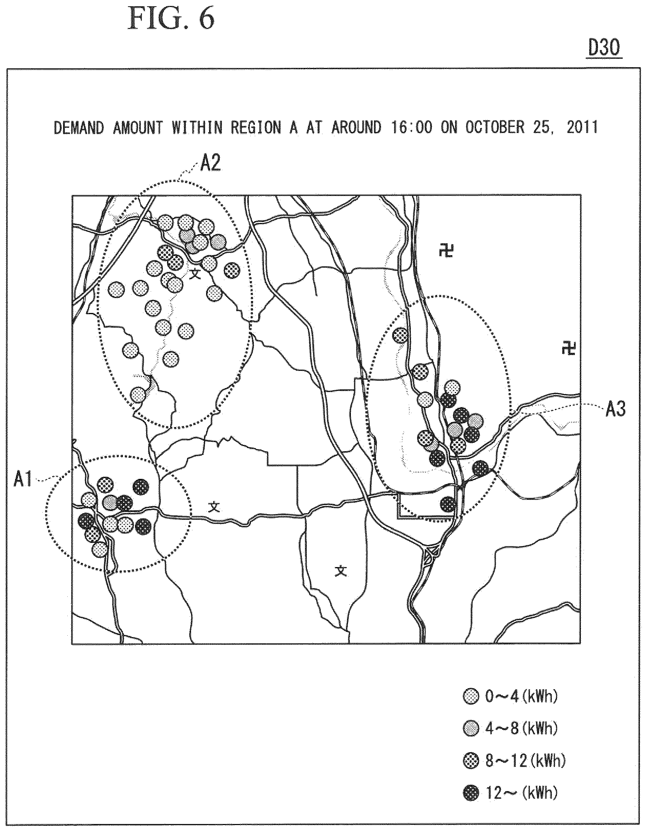

Fig. 6 illustrates an example of data D30 in which a demand amount of power is visualized. The data D30 is data in which a demand amount of power of each electric vehicle V is visualized with the position of the electric vehicle V within the region A at 16:00 on October 25, 2011. In this example, a reception time of the floating car data is 16:00 on October 25, 2011, and the fact that the position of the electric vehicle V is within the region A is set as a "predetermined condition" in the present invention.

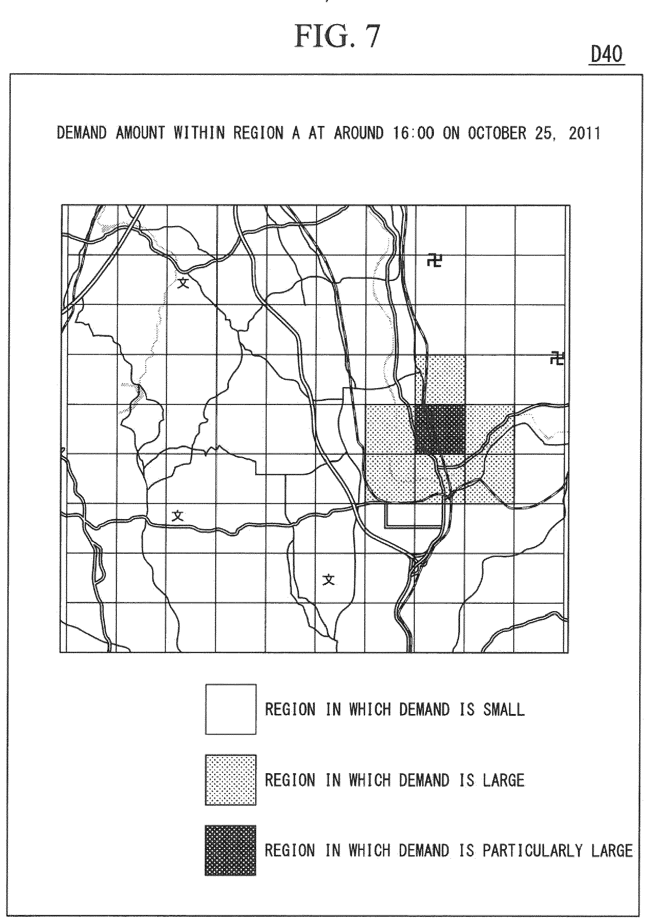

Fig. 7 illustrates an example of data D40 in which a demand amount of power is visualized. The data D40 is data in which a demand amount of power necessary for the electric vehicle V within the region A at 16:00 on October 25, 2011 is displayed as a mesh and visualized. In this example, a reception time of the floating car data is 16:00 on October 25, 2011, and the fact that the position of the electric vehicle V is within the region A is set as a "predetermined condition" in the present invention.

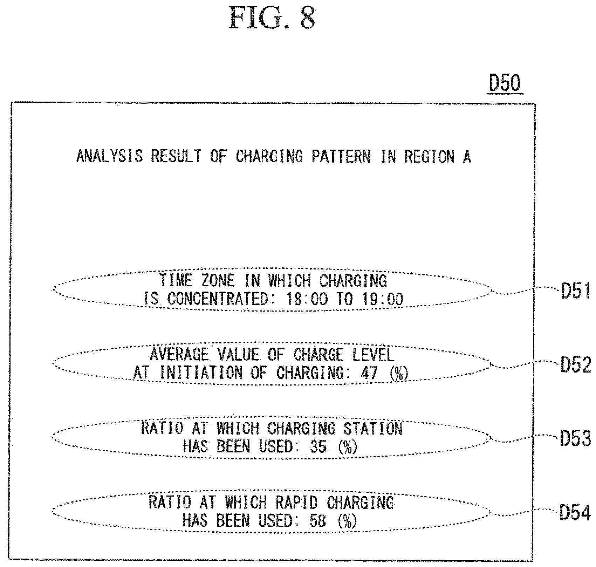

Fig. 8 illustrates an example of data D50 representing an analysis result of a charging pattern of an electric vehicle V. The data D50 is data representing the analysis result of the charging pattern of the electric vehicle V in the region A. In the data D50, information D51 of a time zone in which charging is concentrated, information D52 of an average value of a charge level at the initiation of charging, information D53 of a ratio at which a charging station is used, and information D54 of a ratio at which rapid charging is used is shown.

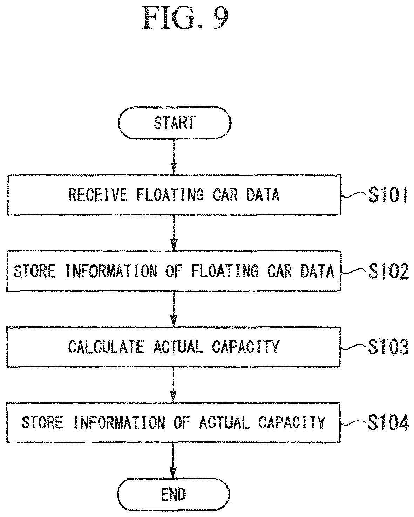

Fig. 9 illustrates an example of an operation flow of the power demand amount calculation apparatus 110. In this operation flow, an operation of the power demand amount calculation apparatus 110 when the floating car data D10 is received will be described. In addition, the operation flow will be described with reference to Figs. 1 to 8 together.

The vehicle-mounted device U of the electric vehicle V, for example, acquires the information D12 of the rated capacity of the battery of the electric vehicle V, the information D13 of the charge level, and the information D14 of whether the battery is being charged from a control apparatus which controls the battery via the CAN. In addition, the vehicle-mounted device U, for example, acquires the information D15 of the position of the electric vehicle V from a Global Positioning System (GPS) receiver via the CAN. In addition, the vehicle-mounted device U, for example, acquires the information D16 of the vehicle model of the electric vehicle V from the control apparatus of the electric vehicle V via the CAN. Then, the vehicle-mounted device U transmits the floating car data D10 as illustrated in Fig. 4 including the information D12 to D16 and the information D11 of the vehicle ID of the electric vehicle V to the power demand amount calculation apparatus 110 via the communication circuit N.

Upon receiving the floating car data D10 transmitted from the vehicle-mounted device U of the electric vehicle V (S101), the floating car data reception unit 111 of the power demand amount calculation apparatus 110 associates information included in the floating car data D10 and stores the associated information in the history information storage unit 119 (S102). In this manner, as illustrated in Fig. 3, information of a date and time (Year, Month, Day, Hour, Minute), a vehicle ID, a rated capacity (kWh), a charge level (%), an actual capacity (kWh), information concerning whether or not charging is in progress (Yes or No), a position (latitude and/or longitude), and a vehicle model is associated and stored in the history information storage unit 119 of the power demand amount calculation apparatus 110.

As described above, when new information of the electric vehicle V is stored in the history information storage unit 119, the actual capacity calculation unit 112 of the power demand amount calculation apparatus 110 calculates the actual capacity of the battery based on the newly stored information D12 of the rated capacity of the battery of the electric vehicle V and the information D13 of the charge level (S103). Here, a value of the actual capacity is a value obtained by multiplying a value of the rated capacity by a decimal number representing a ratio of the charge level. For example, when the rated capacity is 16.0 (kWh) and the charge level is 50 (%), the actual capacity of the battery becomes 16.0 (kWh)×50 (%)/100 = 8.0 (kWh). When the actual capacity of the battery is calculated in this manner, the actual capacity calculation unit 112 associates information of the actual capacity with the above-described new information of the electric vehicle V and stores an association result in the history information storage unit 119 (S104). In this manner, as illustrated in Fig. 3, information of the actual capacity (kWh) is further associated and stored in the history information storage unit 119.

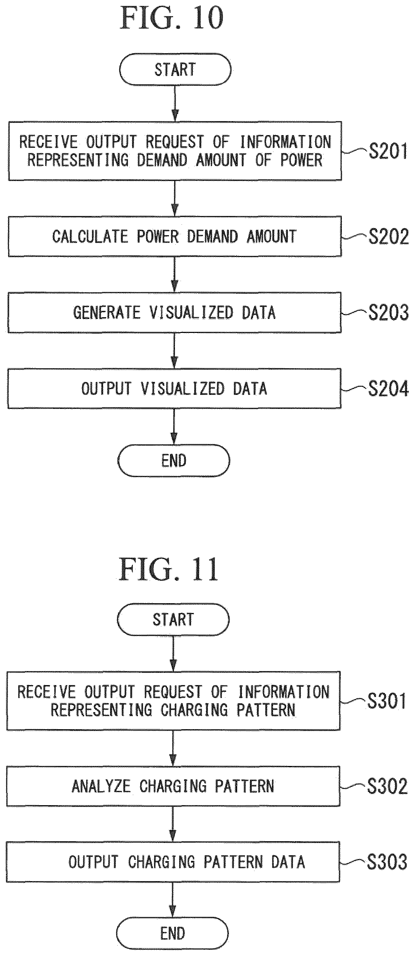

Fig. 10 illustrates an example of an operation flow of the power demand amount calculation apparatus 110. In this operation flow, an operation of the power demand amount calculation apparatus 110 when an output request for information representing a demand amount of power is received will be described. In addition, the operation flow will be described with reference to Figs. 1 to 9 together.

For example, upon desiring to obtain information representing a demand amount of power necessary for the electric vehicle V, the provider of the power demand amount calculation system 100 issues an information output request via the input apparatus of the power demand amount calculation apparatus 110. In this case, for power necessary for the electric vehicle V satisfying any condition, the provider issues the output request by designating the condition. For example, a time zone, a region, or the like is considered to be designated as the condition. In addition, the provider issues the output request by designating a method of visualizing information representing a demand amount of power necessary for the electric vehicle V. For example, a method of representing a time-dependent change in the demand amount in a graph is considered as the visualization method. In addition, a method of displaying a position of the electric vehicle V on a map and displaying the demand amount of power necessary for the electric vehicle V is considered as the visualization method. In addition, a method of displaying a magnitude of power demand in a mesh display on the map is considered as the visualization method.

Upon receiving the output request as described above (S201), the output request reception unit 113 of the power demand amount calculation apparatus 110 sends data representing the condition and the visualization method designated at the time of the output request to the power demand amount calculation unit 114. In addition, the output request reception unit 113 sends the data representing the designated visualization method to the visualized data generation unit 115.

Upon receiving the data sent from the output request reception unit 113, the power demand amount calculation unit 114 of the power demand amount calculation apparatus 110 calculates the demand amount of power necessary for the electric vehicle V satisfying the condition based on at least the information of the rated capacity and the information of the actual capacity of the battery of the electric vehicle V satisfying the condition represented by data received from the output request reception unit 113 among the information stored in the history information storage unit 119 (S202). For example, when a predetermined time zone is designated as the condition, the power demand amount calculation unit 114 calculates the demand amount of power necessary for the electric vehicle V by targeting information of the electric vehicle V corresponding to the predetermined time zone designated by the information of the date and time (Year, Month, Day, Hour, Minute) among the information stored in the history information storage unit 119. In addition, for example, when a predetermined region is designated as the condition, the power demand amount calculation unit 114 calculates the demand amount of the power necessary for the electric vehicle V by targeting the information of the electric vehicle V corresponding to the region designated by the information of the position (latitude and/or longitude) among the information stored in the history information storage unit 119. In addition, here, the power demand amount calculation unit 114 calculates the demand amount of power necessary for the electric vehicle V in which information concerning whether or not charging is in progress (Yes or No) is "No" among the information stored in the history information storage unit 119. This is based on the fact that the demand of power for the electric vehicle V which is being charged is already being met. Here, the demand amount of power necessary for the electric vehicle V is a value obtained by subtracting a value of the actual capacity from a value of the rated capacity of the electric vehicle V. For example, when the rated capacity of the battery of the electric vehicle V is 16.0 (kWh) and the actual capacity is 8.0 (kWh), the demand amount of power necessary for the electric vehicle V becomes 16.0 (kWh)-8.0 (kWh) = 8.0 (kWh). In addition, when there are a plurality of electric vehicles V which satisfy a predetermined condition, the power demand amount calculation unit 114 calculates a value obtained by adding a demand amount of power necessary for each electric vehicle V as a demand amount of power necessary for the electric vehicles V which satisfy the predetermined condition. Then, the power demand amount calculation unit 114 sends data representing the calculated demand amount of power to the visualized data generation unit 115. In this case, when the method of representing the time-dependent change in the demand amount in the graph is designated as the visualization method, the power demand amount calculation unit 114, for example, sends data representing demand amounts of the power at a plurality of times of a designated time zone to the visualized data generation unit 115. In addition, when the method of displaying a position of the electric vehicle V on a map and displaying the demand amount of power necessary for the electric vehicle is considered as the visualization method, the power demand amount calculation unit 114 sends data representing the demand amount of power necessary for each electric vehicle V and the position of each electric vehicle V to the visualized data generation unit 115. In addition, even when the method of displaying a level of the demand of power in a mesh display on the map is designated as the visualization method, the power demand amount calculation unit 114 sends the data representing the demand amount of power necessary for each electric vehicle V and the position of each electric vehicle V to the visualized data generation unit 115.

Upon receiving data sent from the output request reception unit 113 and the power demand amount calculation unit 114, the visualized data generation unit 115 of the power demand amount calculation apparatus 110 generates visualized data according to the visualization method represented by the data received from the output request reception unit 113 (S203). For example, when the method of representing the time-dependent change in the demand amount in the graph is designated as the visualization method, the visualized data generation unit 115 generates the data D20 as illustrated in Fig. 5 by plotting a value of the demand amount of power at each time represented by the data received from the power demand amount calculation unit 114 on the graph. In addition, for example, when the method of displaying a position of the electric vehicle V on the map and displaying the demand amount of power necessary for the electric vehicle is considered as the visualization method, the visualized data generation unit 115 plots the position of the electric vehicle V represented by the data received from the power demand amount calculation unit 114 on the map. In this case, the visualized data generation unit 115 generates the data D30 as illustrated in Fig. 6 by changing a type of plot according to a demand amount of power necessary for the electric vehicle V. In addition, for example, when the method of displaying the level of the demand of power in the mesh display on the map is designated as the visualization method, the visualized data generation unit 115 specifies the position of each electric vehicle V received from the power demand amount calculation unit 114, performs the mesh display according to a magnitude of the demand amount of power necessary for the electric vehicle V, and generates the data D40 as illustrated in Fig. 7. Then, the visualized data generation unit 115 sends the generated data in which the demand amount of power has been visualized to the visualized data output unit 116.

Upon receiving the data sent from the visualized data generation unit 115, the visualized data output unit 116 of the power demand amount calculation apparatus 110 outputs the data to the output apparatus. The output apparatus outputs information of the demand amount of power represented by the data. In this manner, the provider of the power demand amount calculation system 100 can identify the demand amount of power necessary for the electric vehicle V satisfying a predetermined condition.

Fig. 11 illustrates an example of an operation flow of the power demand amount calculation apparatus 110. In this operation flow, an operation of the power demand amount calculation apparatus 110 when an output request for information representing an analysis result of a charging pattern of the electric vehicle V is received will be described. In addition, the operation flow will be described with reference to Figs. 1 to 10 together.

For example, upon desiring to obtain the information representing the analysis result of the charging pattern of the electric vehicle V, the provider of the power demand amount calculation system 100 issues an information output request via the input apparatus of the power demand amount calculation apparatus 110. In this case, for a charging pattern of the electric vehicle V satisfying any condition, the provider issues the output request by designating the condition. For example, a region, or the like is considered to be designated as the condition. In addition, the provider issues the output request by designating analysis content of the charging pattern. For example, a time zone in which charging is concentrated, an average value of a charge level at the initiation of charging, a ratio at which a charging station has been used, a ratio at which rapid charging has been used, etc. are considered as the analysis content.

Upon receiving the output request as described above (S301), the output request reception unit 113 of the power demand amount calculation apparatus 110 sends data representing the designated condition and the analysis content in the output request to the charging pattern analysis unit 117.

Upon receiving the data sent from the output request reception unit 113, the charging pattern analysis unit 117 of the power demand amount calculation apparatus 110 analyzes the charging pattern of the electric vehicle V by targeting information in which information concerning whether or not charging is in progress (Yes or No) is "Yes" among the information stored in the history information storage unit 119 (S302). For example, when an electric vehicle V being located within a predetermined region is designated as the condition, the charging pattern analysis unit 117 performs analysis by referring to information of the position (latitude and/or longitude) stored in the history information storage unit 119 and targeting only information of the electric vehicle V within a designated region. For example, when the time zone in which charging is concentrated is designated as the analysis content, the charging pattern analysis unit 117 specifies the time zone in which charging is concentrated by referring to information of the date and time (Year/Month/Day/Hour/Minute) stored in the history information storage unit 119. In addition, for example, when the average value of the charge level at the initiation of charging is designated as the analysis content, the charging pattern analysis unit 117 calculates the average value of the charge level at the initiation of charging of the electric vehicle V serving as a target based on a value of the charge level (%) when there is a change from "No" to "Yes" by temporally referring to information concerning whether or not charging is in progress (Yes or No) stored in the history information storage unit 119. In addition, for example, when the ratio at which the charging station has been used is designated as the analysis content, the charging pattern analysis unit 117 calculates the ratio at which the charging station has been used by referring to the information of the position (latitude and/or longitude) stored in the history information storage unit 119 and specifying whether the position of the electric vehicle V which is being charged is a position of a public charging station. In addition, for example, when the ratio at which rapid charging has been used is designated as the analysis content, the charging pattern analysis unit 117 calculates the ratio at which the rapid charging has been used by referring to a time-dependent change in a value of the charge level (%) or the actual capacity (kWh) stored in the history information storage unit 119 and specifying whether the electric vehicle V has been rapidly charged. Then, the charging pattern analysis unit 117 sends the data D50 representing the analysis result as illustrated in Fig. 8 to the charging pattern data output unit 118.

Upon receiving the data sent from the charging pattern analysis unit 117, the charging pattern data output unit 118 of the power demand amount calculation apparatus 110 outputs the data to the output apparatus. The output apparatus outputs information of the analysis result of the charging pattern represented by the data. In this manner, the provider of the power demand amount calculation system 100 can identify the charging pattern of the electric vehicle V satisfying a predetermined condition.

As described above, the power demand amount calculation apparatus 110 calculates a demand amount of power necessary for the electric vehicle V satisfying the predetermined condition based on the rated capacity and the actual capacity of the battery of the electric vehicle V satisfying the predetermined condition among a plurality of electric vehicles V. In this manner, the power demand amount calculation system 1 00 can calculate a highly reliable value as a demand amount of power necessary for the plurality of electric vehicles V.

In addition, as described above, the power demand amount calculation apparatus 110 calculates the actual capacity of the battery based on the rated capacity and the charge level of the battery of the electric vehicle V. In this manner, the power demand amount calculation system 100 can calculate the actual capacity of the battery necessary to calculate the demand amount of power.

In addition, as described above, the power demand amount calculation apparatus 110 receives floating car data including at least information representing the rated capacity of the battery of the electric vehicle V and information representing the charge level from the vehicle-mounted device U of the electric vehicle V. In this manner, the power demand amount calculation system 100 can acquire information necessary to calculate the actual capacity of the battery.

In addition, as described above, the power demand amount calculation apparatus 110 calculates a demand amount of power necessary for the electric vehicle V excluding an electric vehicle V which is being charged. The power demand amount calculation system 100 can calculate the demand amount of power by targeting only a certain electric vehicle V of power demand in which charging is not yet initiated.

In addition, as described above, the power demand amount calculation apparatus 110 generates data in which the demand amount of power is visualized. In this manner, the power demand amount calculation system 100 can visually identify a demand amount of power necessary for the electric vehicle V satisfying a predetermined condition.

In addition, as described above, the power demand amount calculation apparatus 110 analyzes the charging pattern of the electric vehicle V based on at least a time-dependent change in the actual capacity of the battery of the electric vehicle V. In this manner, the power demand amount calculation system 100 can identify a form of the charging pattern of the electric vehicle V.

In addition, as described above, the power demand amount calculation apparatus 110 further analyzes the charging pattern based on position information of the electric vehicle V. In this manner, the power demand amount calculation system 100 can also identify the ratio at which the charging station has been used.

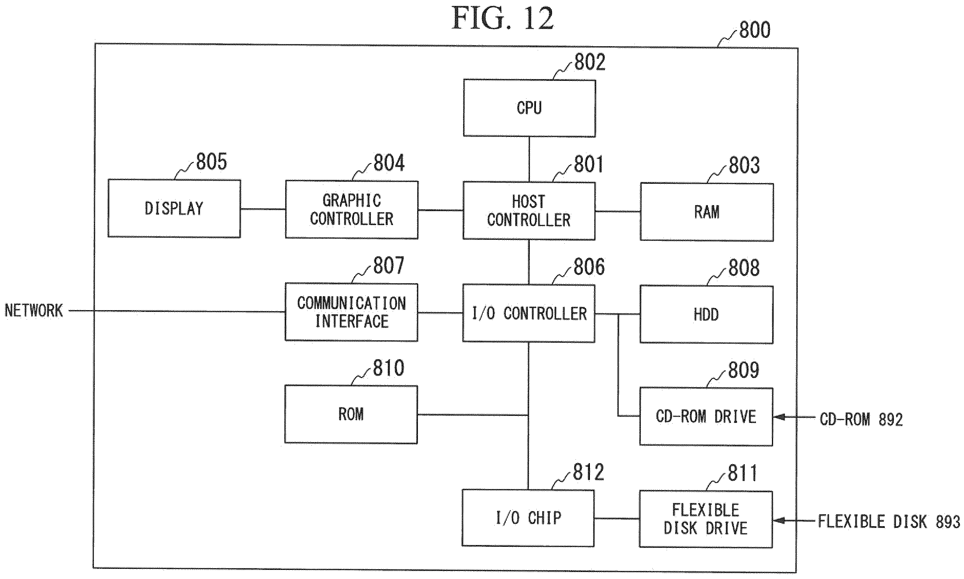

Fig. 12 illustrates an example of a hardware configuration of a computer 800 constituting the power demand amount calculation apparatus 110 according to this embodiment. The computer 800 according to this embodiment includes a central processing unit (CPU) peripheral unit, an input/output (I/O) unit, and a legacy I/O unit, wherein the CPU peripheral unit includes a CPU 802, a random access memory (RAM) 803, a graphic controller 804, and a display 805 mutually connected via a host controller 801, the I/O unit includes a communication interface 807, a hard disk drive (HDD) 808, and a compact disc-read only memory (CD-ROM) drive 809 connected to the host controller 801 via an I/O controller 806, and the legacy I/O unit includes a ROM 810, a flexible disk drive 811, and an I/O chip 812 connected to the I/O controller 806.

The host controller 801 connects the RAM 803 to the CPU 802 and the graphic controller 804 which access the RAM 803 at high transfer rates. The CPU 802 operates based on programs stored in the ROM 810 and the RAM 803 to control each part. The graphic controller 804 acquires image data generated by the CPU 802 or the like in a frame buffer provided in the RAM 803 and displays the image data on the display 805. In place of this, the graphic controller 804 may internally include a frame buffer which stores image data generated by the CPU 802 or the like.

The I/O controller 806 connects the host controller 801 to the communication interface 807, the HDD 808, and the CD-ROM drive 809 which are relatively high-speed I/O apparatuses. The HDD 808 stores programs and data used by the CPU 802 within the computer 800. The CD-ROM drive 809 reads programs or data from a CD-ROM 892 and provides the programs or the data to the HDD 808 via the RAM 803.

The I/O controller 806 is also connected to the ROM 810, the flexible disk drive 811, and the I/O chip 812 which are relatively low-speed I/O apparatuses. The ROM 810 stores a boot program to be executed when the computer 800 is activated and/or programs, etc. depending on hardware of the computer 800. The flexible disk drive 811 reads programs or data from a flexible disk 893 and provides the programs or the data to the HDD 808 via the RAM 803. The I/O chip 812 connects the flexible disk drive 811 to the I/O controller 806 and also connects various I/O apparatuses to the I/O controller 806 via, for example, a parallel port, a serial port, a keyboard port, a mouse port, etc.

The programs supplied to the HDD 808 via the RAM 803 are stored on a recording medium, such as the flexible disk 893, the CD-ROM 892, or an integrated circuit (IC) card, and are provided to a user. The programs are read from the recording medium, installed on the HDD 808 within the computer 800 via the RAM 803, and executed in the CPU 802.

A program that is installed on the computer 800 and causes the computer 800 to function as the power demand amount calculation apparatus 110 causes the computer 800 to function as the power demand amount calculation unit 114 which calculates a demand amount of power necessary for the electric vehicle V satisfying a predetermined condition based on at least a rated capacity and an actual capacity of a battery of the electric vehicle V satisfying the predetermined condition in step S202.

Further, the program may cause the computer 800 to function as the actual capacity calculation unit 112 which calculates the actual capacity of the battery based on the rated capacity and the charge level of the battery of the electric vehicle V in step S103 and the power demand amount calculation unit 114 which calculates the demand amount of power in step S202 based on the actual capacity calculated by the actual capacity calculation unit 112.

Further, the program may cause the computer 800 to function as the floating car data reception unit 111 which receives floating car data from the vehicle-mounted device U of the electric vehicle V in step S101 and the actual capacity calculation unit 112 which calculates the actual capacity in step S103 based on the information representing the rated capacity and the information representing the charge level included in the floating car data received by the floating car data reception unit 111.

Further, the program may cause the computer 800 to function as the power demand amount calculation unit 114 which calculates the demand amount of power necessary for the electric vehicle V excluding the electric vehicle V which is being charged in step S202.

Further, the program may cause the computer 800 to function as the visualized data generation unit 115 which generates data in which the demand amount of power calculated by the power demand amount calculation unit 114 is visualized in step S203.

Further, the program may cause the computer 800 to function as the charging pattern analysis unit 117 which analyzes a charging pattern of the electric vehicle V based on at least a time-dependent change in the actual capacity of the battery of the electric vehicle V in step S302.

Further, the program may cause the computer 800 to function as the charging pattern analysis unit 117 which further analyzes the charging pattern based on position information of the electric vehicle V in step S302.

Further, the program may cause the computer 800 to function as the output request reception unit 113 which receives the output request for the information representing the demand amount of power input via the input apparatus in step S201.

Further, the program may cause the computer 800 to function as the visualized data output unit 116 which outputs data in which the demand amount of power is visualized to the output apparatus in step S204.

Further, the program may cause the computer 800 to function as the output request reception unit 113 which receives the output request for the information representing the charging pattern input via the input apparatus in step S301.

Further, the program may cause the computer 800 to function as the charging pattern data output unit 118 which outputs the data representing the analysis result of the charging pattern of the electric vehicle V to the output apparatus in step S303.

Information processing described in the program is loaded to the computer 800, thereby functioning as the floating car data reception unit 111, the actual capacity calculation unit 112, the output request reception unit 113, the power demand amount calculation unit 114, the visualized data generation unit 115, the visualized data output unit 116, the charging pattern analysis unit 117, the charging pattern data output unit 118, and the history information storage unit 119 which are concrete means resulting from cooperation of software and various hardware resources described above. These concrete means implement calculation or processing of information according to the usage of the computer 800 in this embodiment, whereby the characteristic power demand amount calculation apparatus 110 according to the usage is constructed.

For example, when the computer 800 performs communication with an external apparatus or the like, the CPU 802 executes a communication program loaded to the RAM 803 and instructs the communication interface 807 to perform communication processing based on processing content written in the communication program. Under control of the CPU 802, the communication interface 807 reads transmission data stored in a transmission buffer region or the like provided on a storage apparatus, such as the RAM 803, the HDD 808, the flexible disk 893, or the CD-ROM 892 to transmit the transmission data to the network, or the communication interface 807 writes reception data received from the network to a reception buffer region or the like provided on the storage apparatus. In this way, the communication interface 807 may transfer transmission/reception data from and to the storage apparatus using a direct memory access method. In place of this, the CPU 802 reads data from a storage apparatus or the communication interface 807 at a transfer source, and writes the data to the communication interface 807 or a storage apparatus at a transfer destination, whereby transmission/reception data may be transferred.

Moreover, the CPU 802 loads all or a necessary part of a file or a database stored in an external storage apparatus such as the hard disk drive 808, the CD-ROM 892, or the flexible disk 893 to the RAM 803 using the direct memory access transfer or the like. Then, the CPU 802 performs various types of processing on the data in the RAM 803. Then, the CPU 802 writes the processed data back to the external storage apparatus using the direct memory access transfer or the like.

In such processing, because the RAM 803 is considered to temporarily store the content of the external storage apparatus, the RAM 803, the external storage apparatus, and the like are collectively referred to as a memory, a storage unit, or a storage apparatus in the embodiment. Various types of information such as various programs, data, tables, and databases in the embodiment are stored in such a storage apparatus and serve as information processing targets. In addition, the CPU 802 can also hold part of the RAM 803 in a cache memory and perform read and write operations on the cache memory. Even in such an embodiment, because the cache memory undertakes some of the functions of the RAM 803, it is assumed in the embodiment that the cache memory is included in the RAM 803, a memory, and/or a storage apparatus, unless otherwise noted.

Moreover, the CPU 802 performs various types of processing specified by an instruction sequence in a program on data read from the RAM 803. The various types of processing include various types of calculation, processing of information, condition determination, and retrieval and replacement of information described in the embodiment. Then, the CPU 802 writes the processed data back to the RAM 803. For example, when the CPU 802 performs condition determination, the CPU 802 compares each of the various variables shown in the embodiment with another variable or a constant and determines whether a condition is satisfied. The condition includes, for example, whether the variable is greater than the other variable or the constant, whether the variable is less than the other variable or the constant, whether the variable is equal to or greater than the other variable or the constant, whether the variable is equal to or less than the other variable or the constant, and whether the variable is equal to the other variable or the constant. When the condition is satisfied or is not satisfied, the process branches to a different instruction sequence, or a subroutine is called.

Additionally, the CPU 802 can search for information stored in files or databases stored in storage apparatuses. For example, when a plurality of entries, in each of which an attribute value of a second attribute is associated with an attribute value of a first attribute, are stored in a storage apparatus, the CPU 802 searches for an entry whose attribute value of the first attribute satisfies a specified condition from the plurality of entries stored in the storage apparatus and reads the attribute value of the second attribute stored in the entry, thereby obtaining the attribute value of the second attribute associated with the first attribute satisfying the predetermined condition.

The above-described programs or modules may be stored on an external storage medium. In addition to the flexible disk 893 and the CD-ROM 892, for example, an optical recording medium such as a digital versatile disk (DVD) or a compact disk (CD), a magneto-optical recording medium such as a magneto-optical disk (MO), a tape medium, or a semiconductor memory such as an IC card can be used as the storage medium. Moreover, a storage apparatus such as a hard disk or a RAM provided in a server system connected to a dedicated communication network or the Internet may be used as the recording medium, and the programs may be provided to the computer 800 via the network.

### INDUSTRIAL APPLICABILITY

The present invention can be widely applied to a power demand amount calculation system, a power demand amount calculation method, a power demand amount calculation apparatus, etc., so that a highly reliable value can be calculated as the demand amount of power necessary for a plurality of electric vehicles.

### DESCRIPTION OF THE REFERENCE SYMBOLS

100 Power demand amount calculation system
110 Power demand amount calculation apparatus
111 Floating car data reception unit
112 Actual capacity calculation unit
113 Output request reception unit
114 Power demand amount calculation unit
115 Visualized data generation unit
116 Visualized data output unit
117 Charging pattern analysis unit
118 Charging pattern data output unit
119 History information storage unit
800 Computer
801 Host controller
802 CPU
803 RAM
804 Graphic controller
805 Display
806 I/O controllers
807 Communication interface
808 HDD
809 CD-ROM drive
810 ROM
811 Flexible disk drive
812 I/O chip
891 Network communication apparatus
892 CD-ROM
893 Flexible disk
D10 Floating car data
D11 Information of vehicle ID
D12 Information of rated capacity (kWh)
D13 Information of charge level (%)
D14 Information concerning whether or not charging is in progress
D15 Information of position
D16 Information of vehicle model
D20 Data in which demand amount of power is visualized
D30 Data in which demand amount of power is visualized
D40 Data in which demand amount of power is visualized
D50 Data representing analysis result of charging pattern of electric vehicle V
D51 Information of time zone in which charging is concentrated
D52 Information of average value of charge level at initiation of charging
D53 Information of ratio at which charging station is used
D54 Information of ratio at which rapid charging is used
N Communication circuit
U Vehicle-mounted device
V Electric vehicle

## Claims

1. A power demand amount calculation apparatus (110) for calculating a demand amount of power necessary for a plurality of electric vehicles (Va, Vb, Vc), the power demand amount calculation apparatus (110) comprising:
a floating car data reception unit (111) configured to establish a communication connection with a plurality of vehicle-mounted apparatuses (Ua, Ub, Uc) mounted on the electric vehicles (Va, Vb, Vc) via a communication circuit (N) and to receive floating car data including at least information representing the rated capacity and information representing the charge level of the battery of the electric vehicle and position information of the electric vehicle from the vehicle-mounted apparatus (Ua, Ub, Uc) of the electric vehicle, and
a power demand amount calculation unit (114) configured to calculate a demand amount of power necessary for each electric vehicle within a predetermined region in a predetermined time zone among the plurality of electric vehicles (Va, Vb, Vc) based on at least a rated capacity and an actual capacity of a battery of each electric vehicle within the predetermined region, the actual capacity being obtained based on the rated capacity and a ratio of the charge level;
wherein the power demand amount calculation unit (114) is configured to calculate a demand amount of power necessary for each electric vehicle within the predetermined region excluding any electric vehicle which is being charged.

2. A power demand amount calculation system (100) for calculating a demand amount of power necessary for a plurality of electric vehicles (Vy, Vb, Vc), the power demand amount calculation system (100) comprising:
a power demand amount calculation apparatus (110) according to claim 1 and configured to establish a communication connection with the plurality of vehicle-mounted apparatuses (Ua, Ub, Uc) mounted on the electric vehicles (Va, Vb, Vc) via the communication circuit and calculate a demand amount of power necessary for each electric vehicle.

3. The power demand amount calculation system according to claim 2,
wherein the power demand amount calculation apparatus (110) further includes:
an actual capacity calculation unit (112) configured to calculate the actual capacity of the battery based on the rated capacity and a charge level of the battery of the electric vehicle, and
wherein the power demand amount calculation unit (114) calculates the demand amount of the power based on the actual capacity calculated by the actual capacity calculation unit (112) .

4. The power demand amount calculation system according to claim 2,
wherein the actual capacity calculation unit (112) calculates the actual capacity based on the information representing the rated capacity and the information representing the charge level included in the floating car data received by the floating car data reception unit.

5. The power demand amount calculation system according to any one of claims 2 to 4, wherein the power demand amount calculation apparatus (110) further includes:
a visualized data generation unit (116) configured to generate data in which the demand amount of the power calculated by the power demand amount calculation unit (114) is visualized.

6. The power demand amount calculation system according to any one of claims 2 to 5, wherein the power demand amount calculation apparatus (110) further includes:
a charging pattern analysis unit (118) configured to analyze a charging pattern of the electric vehicle based on at least a time-dependent change in the actual capacity of the battery of the electric vehicle.

7. The power demand amount calculation system according to claim 6, wherein the charging pattern analysis unit (118) is further configured to analyze the charging pattern based on position information of the electric vehicle.

8. The power demand amount calculation system according to any one of claims 2 to 7, wherein the power demand amount calculation apparatus (110) further includes:
a history information storage unit (119) configured to store information associated with each other, the information including a date and time (Year, Month, Day, Hour, Minute), a vehicle identifier (ID) of each electric vehicle, a rated capacity (kWh), a charge level (%), an actual capacity (kWh), information concerning whether or not charging is in progress (Yes or No), a position (latitude and/or longitude), and a vehicle model.

9. A power demand amount calculation method of calculating a demand amount of power necessary for a plurality of electric vehicles, the power demand amount calculation method comprising:
a floating car data reception step of communicating with a plurality of vehicle-mounted apparatuses (Ua, Ub, Uc) mounted on the electric vehicles (Va, Vb, Vc) via a communication circuit (N) and receiving floating car data including at least information representing the rated capacity and information representing the charge level of the battery of the electric vehicle and position information of the electric vehicle from the vehicle-mounted apparatus (Ua, Ub, Uc) of the electric vehicle, and
a power demand amount calculation step of calculating a demand amount of power necessary for each electric vehicle within a predetermined region in a predetermined time zone among the plurality of electric vehicles (Va, Vb, Vc) based on at least a rated capacity and an actual capacity of a battery of each electric vehicle within the predetermined region, the actual capacity being obtained based on the rated capacity and a ratio of the charge level;
wherein the power demand amount calculation step calculates a demand amount of power necessary for each electric vehicle within the predetermined region excluding any electric vehicle which is being charged.

10. A program for causing a computer to function as a power demand amount calculation apparatus (110) for calculating a demand amount of power necessary for a plurality of electric vehicles,
wherein the program causes the computer to perform the method of claim 9.

11. A recording medium recording a program according to claim 10 for causing a computer to function as a power demand amount calculation apparatus (110) for calculating a demand amount of power necessary for a plurality of electric vehicles.

## Patentansprüche

1. Leistungsbedarfsmengen-Berechnungsgerät (110) zum Berechnen einer Leistungsbedarfsmenge, die für eine Vielzahl von Elektrofahrzeugen (Va, Vb, Vc) erforderlich ist, wobei das Leistungsbedarfsmengen-Berechnungsgerät (110) umfasst:
eine Empfangseinheit (111) für Floating-Fahrzeugdaten, die so konfiguriert ist, dass sie eine Kommunikationsverbindung mit einer Vielzahl von fahrzeugmontierten Vorrichtungen (Ua,Ub,Uc), die an den Elektrofahrzeugen (Va,Vb,Vc) montiert sind, über eine Kommunikationsschaltung (N) herstellt und Floating-Fahrzeugdaten empfängt, die mindestens Informationen, die die Nennkapazität darstellen, und Informationen, die den Ladezustand der Batterie des Elektrofahrzeugs darstellen, sowie Positionsinformationen des Elektrofahrzeugs von der fahrzeugmontierten Vorrichtung (Ua,Ub,Uc) des Elektrofahrzeugs enthalten, und
eine Leistungsbedarfsmengen-Berechnungseinheit (114), die konfiguriert ist, um eine Leistungsbedarfsmenge zu berechnen, die für jedes Elektrofahrzeug innerhalb eines vorbestimmten Bereichs in einer vorbestimmten Zeitzone unter der Vielzahl von Elektrofahrzeugen (Va, Vb, Vc) erforderlich ist, basierend auf mindestens einer Nennkapazität und einer tatsächlichen Kapazität einer Batterie jedes Elektrofahrzeugs innerhalb des vorbestimmten Bereichs, wobei die tatsächliche Kapazität basierend auf der Nennkapazität und einem Verhältnis des Ladepegels erhalten wird;
wobei die Leistungsbedarfsmengen-Berechnungseinheit (114) konfiguriert ist, um eine Leistungsbedarfsmenge zu berechnen, die für jedes Elektrofahrzeug innerhalb des vorbestimmten Bereichs erforderlich ist, wobei jedes Elektrofahrzeug, das beim Laden ist, ausgeschlossen ist.

2. Leistungsbedarfsmengen-Berechnungssystem (100) zum Berechnen einer Leistungsbedarfsmenge, die für eine Vielzahl von Elektrofahrzeugen (Vy, Vb, Vc) erforderlich ist, wobei das Leistungsbedarfsmengen-Berechnungssystem (100) umfasst:
ein Leistungsbedarfsmengen-Berechnungsgerät (110) nach Anspruch 1, das so konfiguriert ist, dass es eine Kommunikationsverbindung mit den mehreren fahrzeugmontierten Vorrichtungen (Ua, Ub, Uc), die an den Elektrofahrzeugen (Va, Vb, Vc) montiert sind, über die Kommunikationsschaltung herstellt und eine Bedarfsmenge der für jedes Elektrofahrzeug erforderlichen Leistung berechnet.

3. Das Leistungsbedarfsmengen-Berechnungssystem nach Anspruch 2,
wobei das Leistungsbedarfsmengen-Berechnungsgerät (110) weiterhin enthält:
eine Einheit zur Berechnung der tatsächlichen Kapazität (112), die so konfiguriert ist, dass sie die tatsächliche Kapazität der Batterie auf der Grundlage der Nennkapazität und eines Ladezustands der Batterie des Elektrofahrzeugs berechnet, und
wobei die Leistungsbedarfsmengen-Berechnungseinheit (114) die Bedarfsmenge der Leistung auf der Grundlage der von der Einheit (112) zur Berechnung der tatsächlichen Kapazität berechneten tatsächlichen Kapazität berechnet.

4. Das Leistungsbedarfsmengen-Berechnungssystem (100) nach Anspruch 2,
wobei die Einheit (112) zur Berechnung der tatsächlichen Kapazität die tatsächliche Kapazität auf der Grundlage der die Nennkapazität darstellenden Information und der den Ladungspegel darstellenden Information berechnet, die in den von der Empfangseinheit (111) für Floating-Fahrzeugdaten empfangenen Floating-Fahrzeugdaten enthalten sind.

5. Das Leistungsbedarfsmengen-Berechnungssystem (100) nach einem der Ansprüche 2 bis 4, wobei das Leistungsbedarfsmengen-Berechnungsgerät (110) weiter enthält:
eine visualisierte Datenerzeugungseinheit (116), die so konfiguriert ist, dass sie Daten erzeugt, in denen die von der Leistungsbedarfsmengen-Berechnungseinheit (114) berechnete Lesitungsbedarfsmenge visualisiert wird.

6. Das Leistungsbedarfsmengen-Berechnungssystem (100) nach einem der Ansprüche 2 bis 5, wobei das Leistungsbedarfsmengen-Berechnungsgerät (110) weiterhin enthält:
eine Lademuster-Analyseeinheit (118), die so konfiguriert ist, dass sie ein Lademuster des Elektrofahrzeugs auf der Grundlage mindestens einer zeitabhängigen Änderung der tatsächlichen Kapazität der Batterie des Elektrofahrzeugs analysiert.

7. Das Leistungsbedarfsmengen-Berechnungssystem (100) nach Anspruch 6, wobei die Lademuster-Analyseeinheit (118) ferner so konfiguriert ist, dass sie das Lademuster auf der Grundlage von Positionsinformationen des Elektrofahrzeugs analysiert.

8. Das Leistungsbedarfsmengen-Berechnungssystem (100) nach einem der Ansprüche 2 bis 7, wobei das Leistungsbedarfsmengen-Berechnungsgerät (110) weiterhin enthält:
eine Historieninformationsspeichereinheit (119), die so konfiguriert ist, dass sie Informationen speichert, die einander zugeordnet sind, wobei die Informationen ein Datum und eine Uhrzeit (Jahr, Monat, Tag, Stunde, Minute), eine Fahrzeugkennung (ID) jedes Elektrofahrzeugs, eine Nennkapazität (kWh), einen Ladezustand (%), eine tatsächliche Kapazität (kWh), Informationen darüber, ob der Ladevorgang läuft oder nicht (Ja oder Nein), eine Position (Breiten-und/oder Längengrad) und ein Fahrzeugmodell umfassen.

9. Leistungsbedarfsmengen-Berechnungsverfahren zum Berechnen einer Leistungsbedarfsmenge, die für eine Vielzahl von Elektrofahrzeugen erforderlich ist, wobei das Verfahren zum Berechnen der Leistungsbedarfsmenge umfasst:
einen Empfangsschritt für Floating-Fahrzeugdaten zum Kommunizieren mit einer Vielzahl von fahrzeugmontierten Vorrichtungen (Ua,Ub,Uc), die an den Elektrofahrzeugen (Va,Vb,Vc) montiert sind, über eine Kommunikationsschaltung (N) und zum Empfangen von Floating-Fahrzeugdaten, die mindestens Informationen, die die Nennkapazität darstellen, und Informationen, die den Ladezustand der Batterie des Elektrofahrzeugs darstellen, sowie Positionsinformationen des Elektrofahrzeugs von der fahrzeugmontierten Vorrichtung (Ua,Ub,Ucd) es Elektrofahrzeugs enthalten, und
einen Leistungsbedarfsmengen-Berechnungsschritt zum Berechnen einer Leistungsbedarfsmenge, die für jedes Elektrofahrzeug innerhalb eines vorbestimmten Bereichs in einer vorbestimmten Zeitzone unter der Vielzahl von Elektrofahrzeugen (Va, Vb, Vc) erforderlich ist, auf der Grundlage von mindestens einer Nennkapazität und einer tatsächlichen Kapazität einer Batterie jedes Elektrofahrzeugs innerhalb des vorbestimmten Bereichs, wobei die tatsächliche Kapazität auf der Grundlage der Nennkapazität und eines Verhältnisses des Ladepegels erhalten wird;
wobei der Leistungsbedarfsmengen-Berechnungsschritt eine Leistungsbedarfsmenge berechnet, die für jedes Elektrofahrzeug innerhalb des vorbestimmten Bereichs erforderlich ist, wobei jedes Elektrofahrzeug, das gbeim Laden ist, ausgeschlossen ist.

10. Ein Programm, das einen Computer dazu veranlasst, als ein Leistungsbedarfsmengen-Berechnungsgerät (110) zu funktionieren, um eine Leistungsbedarfsmenge zu berechnen, die für eine Vielzahl von Elektrofahrzeugen erforderlich ist,
wobei das Programm den Computer veranlasst, das Verfahren nach Anspruch 9 durchzuführen.

11. Aufzeichnungsmedium, das ein Programm nach Anspruch 10 aufzeichnet, um einen Computer dazu zu veranlassen, als ein Leistungsbedarfsmengen-Berechnungsgerät (110) zu arbeiten, um eine Leistungsbedarfsmenge zu berechnen, die für eine Vielzahl von Elektrofahrzeugen erforderlich ist.

## Revendications

1. Appareil de calcul de quantité de demande d'énergie (110) pour calculer une quantité de demande d'énergie nécessaire pour une pluralité de véhicules électriques (Va, Vb, Vc), l'appareil de calcul de quantité de demande d'énergie (110) comprenant :
une unité de réception de données variables de véhicule (111) configurée pour établir une connexion de communication avec une pluralité d'appareils embarqués (Ua, Ub, Uc) montés sur les véhicules électriques (Va, Vb, Vc) via un circuit de communication (N) et pour recevoir des données variables de véhicule comportant au moins des informations représentant la capacité nominale et des informations représentant le niveau de charge de la batterie du véhicule électrique et des informations de position du véhicule électrique à partir de l'appareil embarqué (Ua, Ub, Uc) du véhicule électrique, et
une unité de calcul de quantité de demande d'énergie (114) configurée pour calculer une quantité de demande d'énergie nécessaire pour chaque véhicule électrique dans une région prédéterminée dans une zone temporelle prédéterminée parmi la pluralité de véhicules électriques (Va, Vb, Vc) sur la base au moins d'une capacité nominale et d'une capacité réelle d'une batterie de chaque véhicule électrique dans la région prédéterminée, la capacité réelle étant obtenue sur la base de la capacité nominale et d'un rapport du niveau de charge ;
dans lequel l'unité de calcul de quantité de demande d'énergie (114) est configurée pour calculer une quantité de demande d'énergie nécessaire pour chaque véhicule électrique dans la région prédéterminée à l'exclusion de tout véhicule électrique en cours de charge.

2. Système de calcul de quantité de demande d'énergie (100) pour calculer une quantité de demande d'énergie nécessaire pour une pluralité de véhicules électriques (Vy, Vb, Vc), le système de calcul de quantité de demande d'énergie (100) comprenant :
un appareil de calcul de quantité de demande d'énergie (110) selon la revendication 1 et configuré pour établir une connexion de communication avec la pluralité d'appareils embarqués (Ua, Ub, Uc) montés sur les véhicules électriques (Va, Vb, Vc) via le circuit de communication et calculer une quantité de demande d'énergie nécessaire pour chaque véhicule électrique.

3. Système de calcul de quantité de demande d'énergie selon la revendication 2,
dans lequel l'appareil de calcul de quantité de demande d'énergie (110) comporte en outre :
une unité de calcul de capacité réelle (112) configurée pour calculer la capacité réelle de la batterie sur la base de la capacité nominale et d'un niveau de charge de la batterie du véhicule électrique, et
dans lequel l'unité de calcul de quantité de demande d'énergie (114) calcule la quantité de demande d'énergie sur la base de la capacité réelle calculée par l'unité de calcul de capacité réelle (112).

4. Système de calcul de quantité de demande d'énergie selon la revendication 2,
dans lequel l'unité de calcul de capacité réelle (112) calcule la capacité réelle sur la base des informations représentant la capacité nominale et des informations représentant le niveau de charge incluses dans les données variables de véhicule reçues par l'unité de réception de données variables de véhicule.

5. Système de calcul de quantité de demande d'énergie selon l'une quelconque des revendications 2 à 4, dans lequel l'appareil de calcul de quantité de demande d'énergie (110) comporte en outre :
une unité de génération de données visualisées (116) configurée pour générer des données, dans laquelle la quantité de demande d'énergie calculée par l'unité de calcul de quantité de demande d'énergie (114) est visualisée.

6. Système de calcul de quantité de demande d'énergie selon l'une quelconque des revendications 2 à 5, dans lequel l'appareil de calcul de quantité de demande d'énergie (110) comporte en outre :
une unité d'analyse de profil de charge (118) configurée pour analyser un profil de charge du véhicule électrique sur la base d'au moins un changement dépendant du temps de la capacité réelle de la batterie du véhicule électrique.

7. Système de calcul de quantité de demande d'énergie selon la revendication 6, dans lequel l'unité d'analyse de profil de charge (118) est en outre configurée pour analyser le profil de charge sur la base d'informations de position du véhicule électrique.

8. Système de calcul de quantité de demande d'énergie selon l'une quelconque des revendications 2 à 7, dans lequel l'appareil de calcul de quantité de demande d'énergie (110) comporte en outre :
une unité de stockage d'informations d'historique (119) configurée pour stocker des informations associées les unes aux autres, les informations comportant une date et une heure (Année, Mois, Jour, Heure, Minute), un identifiant de véhicule (ID) de chaque véhicule électrique, une capacité nominale (kWh), un niveau de charge (%), une capacité réelle (kWh), des informations indiquant si une charge est en cours ou non (Oui ou Non), une position (latitude et/ou longitude), et un modèle de véhicule.

9. Procédé de calcul de quantité de demande d'énergie consistant à calculer une quantité de demande d'énergie nécessaire pour une pluralité de véhicules électriques, le procédé de calcul de quantité de demande d'énergie comprenant :
une étape de réception de données variables de véhicule consistant à communiquer avec une pluralité d'appareils embarqués (Ua, Ub, Uc) montés sur les véhicules électriques (Va, Vb, Vc) via un circuit de communication (N) et recevoir des données variables de véhicule comportant au moins des informations représentant la capacité nominale et des informations représentant le niveau de charge de la batterie du véhicule électrique et des informations de position du véhicule électrique à partir de l'appareil embarqué (Ua, Ub, Uc) du véhicule électrique, et
une étape de calcul de quantité de demande d'énergie consistant à calculer une quantité de demande d'énergie nécessaire pour chaque véhicule électrique dans une région prédéterminée dans une zone temporelle prédéterminée parmi la pluralité de véhicules électriques (Va, Vb, Vc) sur la base d'au moins une capacité nominale et d'une capacité réelle d'une batterie de chaque véhicule électrique dans la région prédéterminée, la capacité réelle étant obtenue sur la base de la capacité nominale et d'un rapport du niveau de charge ;
dans lequel l'étape de calcul de quantité de demande d'énergie calcule une quantité de demande d'énergie nécessaire pour chaque véhicule électrique dans la région prédéterminée à l'exclusion de tout véhicule électrique en cours de charge.

10. Programme pour amener un ordinateur à fonctionner comme un appareil de calcul de quantité de demande d'énergie (110) pour calculer une quantité de demande d'énergie nécessaire pour une pluralité de véhicules électriques,
dans lequel le programme amène l'ordinateur à mettre en œuvre le procédé selon la revendication 9.

11. Support d'enregistrement enregistrant un programme selon la revendication 10 pour amener un ordinateur à fonctionner comme un appareil de calcul de quantité de demande d'énergie (110) pour calculer une quantité de demande d'énergie nécessaire pour une pluralité de véhicules électriques.
